# EUROPEAN PATENT SPECIFICATION

(11) **EP 2 299 750 B1**
(45) Date of publication and mention of the grant of the patent: **19.12.2018**
(21) Application number: 09766679.6
(22) Date of filing: 17.06.2009
(51) Int. Cl.: H04W 72/12, H04L 5/00

(54) **BASE STATION DEVICE AND MOBILE STATION DEVICE**
BASISSTATIONSEINRICHTUNG UND MOBILSTATIONSEINRICHTUNG
DISPOSITIF DE STATION DE BASE ET DISPOSITIF DE STATION MOBILE

(30) Priority: 20.06.2008 JP 2008161910
(43) Date of publication of application: 23.03.2011
(73) Proprietor: Sharp Kabushiki Kaisha, Osaka-shi, Osaka 545-8522 (JP)
(72) Inventor: AIBA, Tatsushi, Osaka 545-8522 (JP); UEMURA, Katsunari, Osaka 545-8522 (JP)
(74) Representative: Müller Hoffmann & Partner
(86) International application number: PCT/JP2009/061033
(87) International publication number: WO 2009/154231

(56) References cited:
- EP-A1- 1 750 399
- WO-A1-2005/089004
- WO-A2-2007/091858
- JP-A- 2007 166 118
- PANASONIC: 'Technical proposals and considerations for LTE advanced' IMT ADVANCED WORKSHOP REV-080007 April 2008, XP008141077

## Description

### Technical Field

The present invention relates to a technique in which a base station apparatus allocates resources according to reception quality information received from a mobile station apparatus, while the mobile station apparatus calculates the reception quality of a signal received from the base station apparatus and transmits the reception quality information to the base station apparatus.

### Background Art

Conventionally, demand for the data communication has been increased in the field of a mobile communication system. Then, there have been proposed various techniques which provide high frequency utilization efficiency to accommodate the increase of communication data accompanying the demand for the data communication. One of the techniques to increase the frequency utilization efficiency is OFDMA (Orthogonal Frequency Division Multiple Access). This OFDMA relates to a technique of modulation system for performing communication in a communication area configured with cells using the same frequency in all the cells and can realize a high speed data communication.

For the scheduling of transmission packets in an OFDM system, there is known a method in which the mobile station apparatus feeds back a CQI (Channel Quality Indicator), which is information indicating reception quality (channel quality) of a downlink channel state for subcarriers of a wide band and a narrow band, to a base station apparatus, and the base station apparatus performs the scheduling of the packets according to the CQI transmitted from each of the mobile station apparatuses for the subcarriers of the wide band and the narrow band.

Further, for the scheduling of the transmission packets in the OFDM (orthogonal Frequency Division Multiplexing) system using plural subcarriers, there is also known a method in which the mobile station apparatus estimates each channel state of a downlink (frequency characteristic, i.e., characteristic of a transmission loss or the like depending on a frequency) and transmits information obtained by quantizing the each channel state to the base station apparatus, and the base station apparatus decides the subcarrier to be allocated to each of the mobile station apparatuses according to the transmitted information.

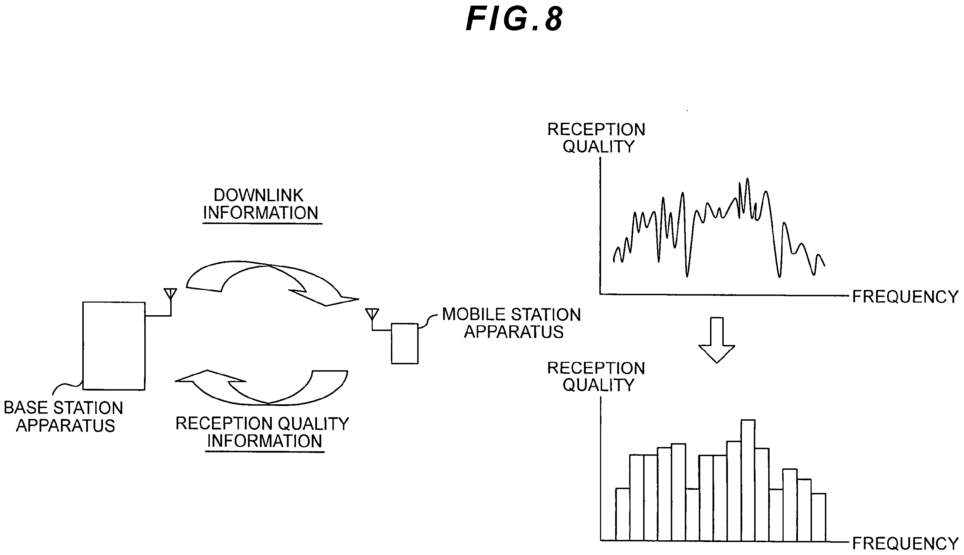

Fig. 8 is a diagram for explaining a conventional communication method between the base station apparatus and the mobile station apparatus. When having received information which was transmitted from the base station apparatus in a downlink to be used for the calculation of the channel state information, the mobile station apparatus calculates the state of each channel according to the information and generates a channel profile of a propagation channel.

The channel profile generated by the mobile station apparatus is transmitted as the reception quality information from the mobile station apparatus to the base station apparatus using an uplink. The base station apparatus performs the processing of adaptive modulation and coding and frequency selective scheduling for a signal to be transmitted from the base station apparatus to the mobile station apparatus, according to the reception quality information.

For this transmission of the reception quality information from the mobile station apparatus to the base station apparatus, the 3GPP (3rd Generation Partnership Project), which is an international standardization project and studying EUTRA (Evolved Universal Terrestrial Radio Access) for a third generation radio access, proposes a single carrier communication system using the DFT (Discrete Fourier Transform)-spread-OFDM system as an information communication system in the uplink and studies to perform the transmission from the mobile station apparatus to the base station apparatus using a dedicated physical uplink control channel (hereinafter, called "PUCCH: Physical Uplink Control Channel") or a physical uplink shared channel (hereinafter, called "PUSCH: Physical Uplink Shared Channel").

Further, the 3GPP is carrying out a study also regarding LTE-A (Long Term Evolution-Advanced) which realizes a further higher speed data transmission and reception utilizing a wider system band width. While a typical system uses a continuous frequency band, it is studied that the LTE-A is operated as one wide-band system using plural discontinuous frequency bands in a multiple manner (frequency band aggregation) (Non-patent document 1). While the EUTRA proposes the single carrier communication system as the information communication system in the uplink, the LTE-A proposes a composite system of the single carrier communication system and a multi-carrier communication system as the information communication system in the uplink.

Non-patent document 2 proposes to divide a frequency band for the calculation of the reception quality information into band width parts (hereinafter called "BP: Bandwidth Part") and to cause the mobile station apparatus to transmit the reception quality information obtained from each of the BPs to the base station apparatus, as a transmission system of the reception quality information transmitted from the mobile station apparatus in the EUTRA.

The transmission method proposed by Non-patent document 2 will be explained by the use of Fig. 9. In the EUTRA, since the resources allocated by the base station apparatus as the PUCCH is small, the size of an information amount to be transmitted becomes small. For example, the resources which can transmit information of approximately 10 bits in a slot can be allocated. On the other hand, the base station apparatus can allocate large resources to the mobile station apparatus as the PUSCH. For example, the resources which can transmit information of 100 bit order can be allocated. The base station apparatus performs processing such as the adaptive modulation and coding and the frequency selective scheduling on downlink information to be transmitted to the mobile station apparatus according to the reception quality information transmitted from the mobile station apparatus. When the mobile station apparatus transmits the detailed reception quality information (i.e., reception quality information having a large information amount), the base station apparatus can perform the processing such as the adaptive modulation and coding and the frequency selective scheduling according to the information, and thereby it is possible to realize a precise communication control (scheduling) between the base station apparatus and the mobile station apparatus and to use the resources in the uplink and the downlink more efficiently.

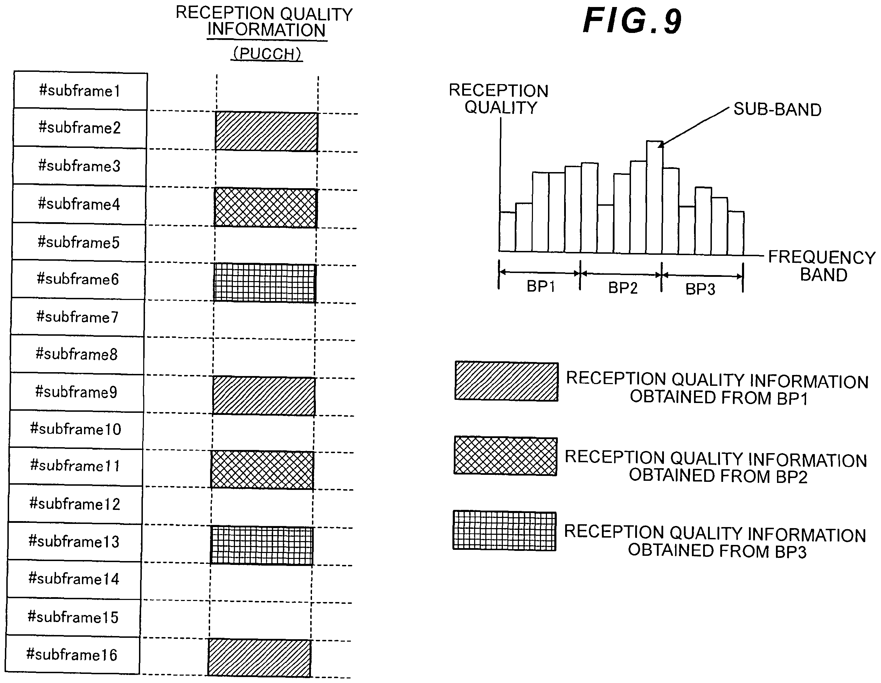

Fig. 9 shows that the frequency band for the calculation of the reception quality information is divided into BPs and the mobile station apparatus transmits the detailed reception quality information obtained from each of the BPs to the base station apparatus. Here, the mobile station apparatus may transmit the reception quality information of a band selected by the base station apparatus from sub-bands within each of the BPs (part of sub-bands within the BP). For example, the mobile station apparatus can transmit the reception quality information obtained from a part N of the sub-bands which is selected by the base station apparatus from the sub-bands within each of the BPs. Further, the mobile station apparatus may transmit the reception quality information obtained from all the sub-bands within each of the BPs.

The reception quality information to be transmitted by the mobile station apparatus to the base station apparatus can be obtained by the mobile station apparatus selecting the M sub-bands from the sub-bands within each of the BPs, for example. The mobile station apparatus selects the M sub-bands from the sub-bands within each of the BPs and can calculate a maximum value, a minimum value, an average value, and the like of the reception quality information obtained from the M sub-bands, for example, to transmit these values to the base station apparatus. The mobile station apparatus transmits to the base station apparatus the reception quality information obtained from the selected M sub-bands and information indicating the positions of the selected M sub-bands. Here, when having calculated the reception quality information from all the sub-bands within each of the BPs, the mobile station apparatus may not transmit the information indicating the positions of the sub-bands.

The left side of Fig. 9 conceptually shows a state of dividing the frequency band for the calculation of the reception quality information into the BPs and transmitting the reception quality information obtained from each of the BPs from the mobile station apparatus to the base station apparatus. The mobile station apparatus transmits the reception quality information obtained from BP1 in #subframe2. Similarly, the mobile station apparatus can transmit the reception quality information obtained from BP2 in #subframe4 and can transmit the reception quality information obtained from BP3 in #subframe6. The base station apparatus performs the processing of the adaptive modulation and coding and the frequency selective scheduling on the downlink information according to the reception quality information transmitted from the mobile station apparatus. Here, the reception quality information sets which are obtained from the respective BPs and transmitted from the mobile station apparatus (reception quality information sets obtained from BP1, BP2 and BP3) may be transmitted in continuous sub-frames, or the reception quality information obtained from one of the BPs (e.g., reception quality information obtained from BP1) may be divided into the plural sub-frames to be transmitted.

In Fig. 9, among the reception quality information sets transmitted by the mobile station apparatus, the reception quality information shown with hatching indicates the reception quality information obtained from BP1 and the reception quality information shown with a mesh indicates the reception quality information obtained from BP2. Further, the reception quality information shown with a grid indicates the reception quality information obtained from BP3.

The transmission method shown in Fig. 9 is a proposal by which the detailed reception quality information for each of the BPs is transmitted to the base station apparatus using the PUCCH, which is restricted in the information size to be transmitted (e.g., the information size to be transmitted is restricted to approximately 10 bits), the base station apparatus realizes a precise communication control (scheduling) according to the transmitted detailed reception quality information, and thus the resources of the uplink and the downlink can be used efficiently.
Non-patent document 1: "Technical proposals and considerations for LTE advanced", 3GPP, IMT advanced Workshop, REV-080007, April 2008
Non-Patent document 2: "Frequency-selective CQI report on PUCCH for Single Tx and TxD", 3GPP, TSG RAN WG1 Meeting #52, R1-080753, February 2008

EP 1 750 399 A1 discloses a wireless communication terminal that measures a channel quality indicator for a plurality of frequency bands, identifies a subset of frequency bands for which the channel quality indicator has been measured based on a subset criterion, and transmits a report identifying a subset of frequency bands for which a channel quality indicator has been measured or frequency bands not in the subset.

WO 2007/091858 A2 discloses a method of exchanging channel quality information between a base station and a user equipment in a mobile communication system.

### Disclosure of the Invention

### Problem to be Solved by the Invention

The conventional technique, however, does not specifically describe from which frequency band the reception quality information is obtained to be transmitted when the mobile station apparatus transmits to the base station apparatus each of the reception quality information sets obtained from the plural frequency bands.

For example, when many mobile station apparatuses existing in one cell transmit the reception quality information sets which are obtained from BP1 as shown in Fig. 9, at the same time, the base station apparatus performs the communication control (scheduling) so as to allocate these many mobile station apparatuses to the resources of BP1 at the same time. That is, if many mobile station apparatuses existing in the cell transmit the reception quality information sets obtained from the same BP (e.g., BP1) at the same timing (in the same sub-frame), there arises a problem that the base station apparatus attempts to allocate these mobile station apparatuses to one BP (e.g., BP1) and does not perform the communication control (scheduling) so as to allocate the mobile station apparatuses to the resources of the other BPs (e.g., BP2 and BP3).

The base station apparatus performs the communication control (scheduling) according to the reception quality information which is obtained from each of the BPs and transmitted from the mobile station apparatus, and thereby, when each of many mobile station apparatuses transmits the reception quality information obtained from the same BP, the base station apparatus cannot efficiently use all the resources to be allocated to the mobile station apparatuses (all the frequency bands, here, all of BP1, BP2 and BP3). This results in reducing a frequency efficiency of the communication control (scheduling) performed by the base station apparatus.

In this manner, the conventional technique has a problem that each of the mobile station apparatuses transmits the reception quality information obtained from the same frequency band at the same timing when transmitting each of the reception quality information sets obtained from the plural frequency bands to the base station apparatus, and the base station apparatus cannot efficiently use all the resources (all frequency bands) to be allocated to the mobile station apparatuses. This causes a problem that the frequency efficiency of the communication control (scheduling) by the base station apparatus is reduced.

The present invention is achieved in view of such a situation and aims at providing a base station apparatus and a mobile station apparatus which can efficiently use all resources (frequency bands) to be allocatable to the mobile station apparatuses by causing the base station apparatus to control from which frequency band reception quality information is obtained to be transmitted when the mobile station apparatus transmits to the base station apparatus each of the reception quality information sets obtained from the plural frequency bands, and can improve the frequency efficiency of the communication control (scheduling) by the base station apparatus. The present invention can be applied not only to the case of transmitting the reception quality information by dividing the frequency band into the plural band width parts but also to the case of operating the system as one wide-band system by using the discontinuous frequency bands in a multiple manner as explained above.

### Means for Solving the Problem

This object is solved by the independent claims. Further advantageous embodiments and refinements of the present invention are described in the respective sub-claims.

A base station apparatus receives reception quality information from a mobile station apparatus, and transmits, to the mobile station apparatus which transmits each of reception quality information sets obtained from a plurality of frequency bands,
frequency band indication information which indicates a frequency band for which the reception quality information is to be transmitted first.

In this manner, when the mobile station apparatus transmits to the base station apparatus each of the reception quality information sets obtained from the plurality of frequency bands, the base station apparatus transmits to the mobile station apparatus the frequency band indication information indicating from which frequency band the reception quality information is obtained to be transmitted first, and thereby the base station apparatus can control from which frequency band the reception quality information is obtained to be transmitted first by the mobile station apparatus. Accordingly, it is possible to distribute at random the frequency bands from which the reception quality information is obtained to be transmitted first from the mobile station apparatus. As a result, it becomes possible to efficiently use all resources (frequency bands) to be allocatable to the mobile station apparatuses when performing the processing of the adaptive modulation and coding and the frequency selective scheduling on information to be transmitted using the downlink according to the reception quality information transmitted from the mobile station apparatus, and it becomes possible to improve the frequency efficiency of communication control (scheduling) between the base station apparatus and the mobile station apparatus.
(2) Further, the base station apparatus transmits to the mobile station apparatus the frequency band indication information which indicates
   the frequency band for which the reception quality information is to be transmitted first included in a radio resource control signaling.
   In this manner, the base station apparatus transmits to the mobile station apparatus the frequency band indication information indicating from which frequency band the reception quality information is obtained to be transmitted first, which included in the radio resource control signaling when the mobile station apparatus transmits to the base station apparatus each of the reception quality information sets obtained from the plurality of frequency bands, and thereby the base station apparatus can control from which frequency band the reception quality information is obtained to be transmitted by the mobile station apparatus . Thereby, it is possible to distribute at random the frequency bands for obtaining the reception quality information to be transmitted first from the mobile station apparatus. As a result, it becomes possible to efficiently use all the resources (frequency bands) to be allocatable to the mobile station apparatuses when performing the processing of the adaptive modulation and coding and the frequency selective scheduling on the information to be transmitted in the downlink according to the reception quality information transmitted from the mobile station apparatus, and it becomes possible to improve the frequency efficiency of the communication control (scheduling) between the base station apparatus and the mobile station apparatus.
(3) Further, the base station apparatus transmits to the mobile station apparatus the frequency band indication information which indicates a frequency band having a wider band width than any of the plurality of frequency bands for which the mobile station apparatus transmits the reception quality information or indicates all the frequency bands.
   In this manner, the base station apparatus transmits to the mobile station apparatus the frequency band indication information indicating a frequency band having a wider band width than any of the plurality of frequency bands for which the mobile station apparatus transmits the reception quality information or indicating all the frequency bands, and thereby the base station apparatus can control from which frequency band the reception quality information is obtained to be transmitted by the mobile station apparatus. Thereby, it is possible to distribute at random the band for obtaining the reception quality information to be transmitted from the mobile station apparatus. As a result, it becomes possible to efficiently use all the resources (frequency bands) to be allocatable to the mobile station apparatuses when performing the processing of the adaptive modulation and coding and the frequency selective scheduling on the information to be transmitted in the downlink according to the reception quality information transmitted from the mobile station apparatus, and it becomes possible to improve the frequency efficiency of the communication control (scheduling) between the base station apparatus and the mobile station apparatus.
(4) Further, a mobile station apparatus transmits, to a base station apparatus, reception quality information which indicates quality of a signal received from the base station apparatus, and transmits first, to the base station apparatus, reception quality information obtained from a frequency band indicated by frequency band indication information from the base station apparatus.
   In this manner, the mobile station apparatus transmits first to the base station apparatus the reception quality information obtained from the frequency band which is indicated by the frequency band indication information, according to the frequency band indication information indicating from which frequency band the reception quality information is obtained to be transmitted first, when transmitting to the base station apparatus each of the reception quality information sets obtained from the plurality of frequency bands, and thereby the base station apparatus can control from which frequency band the reception quality information is obtained to be transmitted by the mobile station apparatus. Accordingly, it is possible to distribute at random the band for obtaining the reception quality information to be transmitted from the mobile station apparatus. As a result, it becomes possible to efficiently use all the resources (frequency bands) to be allocatable to the mobile station apparatuses when performing the processing of the adaptive modulation and coding and the frequency selective scheduling on the information to be transmitted in the downlink according to the reception quality information transmitted from the mobile station apparatus, and it becomes possible to improve the frequency efficiency of the communication control (scheduling) between the base station apparatus and the mobile station apparatus.
(5) Further, a mobile station apparatus transmits, to a base station apparatus, reception quality information which indicates quality of a signal received from the base station apparatus, and transmits first, to the base station apparatus, reception quality information obtained from a frequency band which is calculated from information specific to the mobile station apparatus.
   In this manner, the mobile station apparatus transmits first the reception quality information obtained from the frequency band which is calculated from the information specific to the mobile station apparatus when transmitting to the base station apparatus each of the reception quality information sets obtained from the plurality of frequency bands, and thereby each of the mobile station apparatuses can perform transmission by distributing at random the frequency bands for obtaining the reception quality information without requiring new information to be added to a control signal transmitted from the base station apparatus in a downlink. Thereby, each of the mobile station apparatuses can transmit the reception quality information obtained from the different frequency band at the same timing without increasing control information (e.g., control information included in the radio resource control signaling) transmitted in the downlink. The mobile station apparatus can decide from which frequency band the reception quality information is obtained to be transmitted, according to a calculation method preliminarily defined by a specification or the like.
(6) Further, a mobile station apparatus transmits to the base station apparatus reception quality information which indicates quality of a signal received from a base station apparatus, and transmits first, to the base station apparatus, reception quality information obtained from a frequency band which is selected by the mobile station apparatus itself.
   In this manner, the mobile station apparatus transmits first, to the base station apparatus, the reception quality information obtained from the frequency band which is selected by the mobile station apparatus itself when transmitting to the base station apparatus each of the reception quality information sets obtained from the plurality of frequency bands, and thereby each of the mobile station apparatuses can transmit the reception quality information obtained from the different frequency band at the same timing without requiring new information to be added to the control signal transmitted from the base station apparatus in the downlink. By transmitting to the base station apparatus the reception quality information obtained from the frequency band which is selected by each of the mobile station apparatuses, it is possible to distribute at random the frequency bands from which the reception quality information is obtained to be transmitted and the base station apparatus can efficiently use all the resources (frequency bands) to be allocatable to the mobile station apparatuses. Further, the base station apparatus can allocate the resource having a good channel quality (good channel state) preferentially to each of the mobile station apparatuses according to the reception quality information from the mobile station apparatus, and it is possible to improve the efficiency of the communication control (scheduling) between the base station apparatus and the mobile station apparatus.
(7) Further, a mobile station apparatus transmits, to the base station apparatus, reception quality information which indicates quality of a signal received from a base station apparatus, and when having received from the base station apparatus frequency band indication information which indicates a frequency band having a wider band width than any of a plurality of frequency bands for which the reception quality information is to be transmitted or indicates all the frequency bands, the mobile station apparatus transmits first, to the base station apparatus, the reception quality information obtained from a frequency band indicated by the frequency band indication information.
   In this manner, when having received from the base station apparatus the frequency band indication information which indicates a frequency band having a wider band width than any of the plurality of frequency bands for which the reception quality information is to be transmitted or indicates all the frequency bands, the mobile station apparatus transmits first the reception quality information obtained from the frequency band indicated by the frequency band indication information, and thereby the base station apparatus can control from which frequency band the reception quality information is obtained to be transmitted by the mobile station apparatus. Accordingly, it is possible to distribute at random the frequency bands for obtaining the reception quality information to be transmitted from the mobile station apparatus. As a result, it becomes possible to efficiently use all the resources (frequency bands) to be allocatable to the mobile station apparatuses when performing the processing of the adaptive modulation and coding and the frequency selective scheduling on the information to be transmitted in the downlink according to the reception quality information transmitted from the mobile station apparatus, and it becomes possible to improve the frequency efficiency of the communication control (scheduling) between the base station apparatus and the mobile station apparatus.
(8) Further, the base station apparatus is applied to a mobile communication system which is operated as one wide-band system by aggregating a plurality of discontinuous frequency bands.
   By this configuration, the base station apparatus can control from which frequency band the reception quality information is obtained to be transmitted by the mobile station apparatus. Thereby, it is possible to distribute at random the frequency bands for obtaining the reception quality information to be transmitted first from the mobile station apparatus. As a result, it becomes possible to efficiently use all the resources (frequency bands) to be allocatable to the mobile station apparatuses when performing the processing of the adaptive modulation and coding and the frequency selective scheduling on the information to be transmitted in the downlink according to the reception quality information transmitted from the mobile station apparatus, and it becomes possible to improve the frequency efficiency of the communication control (scheduling) between the base station apparatus and the mobile station apparatus.
(9) Further, the mobile station apparatus is applied to a mobile communication system which is operated as one wide-band system by aggregating a plurality of discontinuous frequency bands.
   By this configuration, the base station apparatus can control from which frequency band the reception quality information is obtained to be transmitted by the mobile station apparatus. Thereby, it is possible to distribute at random the band for obtaining the reception quality information to be transmitted from the mobile station apparatus. As a result, it becomes possible to efficiently use all the resources (frequency bands) to be allocatable to the mobile station apparatuses when performing the processing of the adaptive modulation and coding and the frequency selective scheduling on the information to be transmitted in the downlink according to the reception quality information transmitted from the mobile station apparatus, and it becomes possible to improve the frequency efficiency of the communication control (scheduling) between the base station apparatus and the mobile station apparatus.

### Advantages of the Invention

According to the present invention, it is possible to use all the resources (frequency bands) to be allocated to the mobile station apparatuses when the mobile station apparatus transmits to the base station apparatus each of the reception quality information sets obtained from the plural frequency bands, and to improve the frequency efficiency of the communication control (scheduling) by the base station apparatus.

### Brief Description of the Drawings

Fig. 1 is a block diagram showing an outline configuration of a base station apparatus according to a first embodiment of the present invention.
Fig. 2 is a block diagram showing an outline of a mobile station apparatus according to a first embodiment of the present invention.
Fig. 3 is a diagram conceptually showing reception quality information transmitted from a mobile station apparatus according to first, second, and third embodiments, to a base station apparatus by the use of a PUCCH.
Fig. 4 is a flowchart showing a processing sequence in a mobile station apparatus.
Fig. 5 is a diagram for illustrating a fourth embodiment.
Fig. 6 is a diagram for illustrating the fourth embodiment.
Fig. 7 is a diagram for illustrating the fourth embodiment and a flowchart showing a processing sequence.
Fig. 8 is a diagram for illustrating a conventionally known transmission method of reception quality information.
Fig. 9 is a diagram for illustrating a conventionally known transmission method of reception quality information.

### Description of Reference Symbols

- 100:: Base station apparatus
- 101:: Data control section
- 102:: Modulation encoding section
- 103:: Mapping section
- 104:: Inverse fast Fourier transform (IFFT) section
- 105:: Radio transmission section
- 106:: Radio reception section
- 107:: Fast Fourier transform (FFT) section
- 108:: Demodulation decoding section
- 109:: Data extraction section
- 110:: Transmission information control section
- 111:: Antenna
- 112:: Scheduler section
- 113:: Modulation symbol control section
- 114:: Frequency selective scheduler section
- 120:: Transmission section
- 130:: Reception section
- 200:: Mobile station apparatus
- 201:: Data control section
- 202:: Modulation encoding section
- 203:: Mapping section
- 204:: Inverse fast Fourier transform (IFFT) section
- 205:: Radio transmission section
- 206:: Radio reception section
- 207:: Fast Fourier transform section
- 208:: Demodulation decoding section
- 209:: Data extraction section
- 210:: Reception quality information control section
- 211:: Antenna
- 212:: Reception quality information generation section
- 213:: Reception quality measurement section
- 220:: Transmission section
- 230:: Reception section

### Best Modes for Carrying Out the Invention

Next, embodiments of the present invention will be described with reference to the drawings.

### (First embodiment)

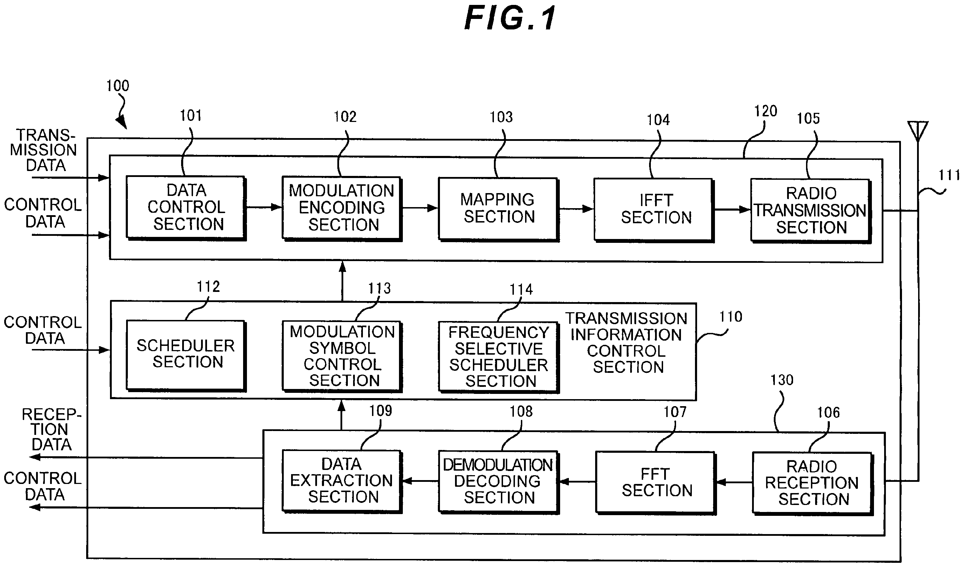

First, a mobile communication system according to a first embodiment of the present invention will be described. This mobile communication system comprises a base station apparatus 100 and a mobile station apparatus 200. Fig. 1 is a block diagram showing an outline configuration of the base station apparatus 100 according to the first embodiment of the present invention. The base station apparatus 100 includes a data control section 101, a modulation encoding section 102, a mapping section 103, an inverse fast Fourier transform (IFFT) section 104, a radio transmission section 105, a radio reception section 106, a fast Fourier transform (FFT) section 107, a demodulation decoding section 108, a data extraction section 109, a transmission information control section 110, and an antenna 111. The transmission information control section 110 includes a scheduler section 112, a modulation symbol control section 113, and a frequency selective scheduler section 114.

Here, the data control section 101, the modulation encoding section 102, the mapping section 103, the inverse fast Fourier transform (IFFT) section 104, and the radio transmission section 105 constitute a transmission section 120, and the radio reception section 106, the fast Fourier transform (FFT) section 107, the demodulation decoding section 108, and the data extraction section 109 constitute a reception section 130.

In the base station apparatus 100, the data control section 101 receives transmission data to be transmitted to each of the mobile station apparatuses 200 and control data, and each of the data sets is transmitted sequentially to the mobile station apparatus 200 according to an instruction from the scheduler section 112. The modulation encoding section 102 performs modulation processing and error correction encoding processing on a signal input from the data control section 101 according to a modulation system and a coding rate which are decided by the modulation symbol control section 113 and outputs each of the data sets to the mapping section 103. The mapping section 103 maps the data input from the modulation encoding section 102 on each carrier according to frequency selective scheduling information input from the frequency selective scheduler section 114 and outputs the result to the inverse fast Fourier transform (IFFT) section 104.

The inverse fast Fourier transform (IFFT) section 104 performs processing of inverse fast Fourier transform on the data input from the mapping section 103 to convert the data into a temporal sequence base band digital signal and outputs the result to the radio transmission section 105. The radio transmission section 105 performs digital/analog conversion on the signal input from the inverse fast Fourier transform section 104, and transmits the result to each of the mobile station apparatuses 200 via the antenna 111 after up-conversion to a frequency suitable for transmission.

The radio reception section 106 performs analog/digital conversion on a radio signal received by the antenna 111 and outputs the result to the fast Fourier transform section 107. The fast Fourier transform section 107 performs fast Fourier transform on the signal input from the radio reception section 106, and separates the signal into data sets of the respective sub-carriers to output the result to a mapping section which is not shown in the drawing. This mapping section takes out data mapped on each of the sub-carriers and outputs the data to the demodulation decoding section 108. The demodulation decoding section 108 performs demodulation processing and error correction decoding processing on the data input from the mapping section and outputs the reception data after the error correction decoding to the data extraction section 109. The data extraction section 109 extracts reception quality information from the reception data input from the demodulation decoding section 108 after the error correction decoding and outputs the reception quality information to the transmission information control section 110. Further, the reception data except the reception quality information and control data are output to an upper layer and the like.

The scheduler section 112 performs scheduling for a downlink and scheduling for an uplink according to control information such as a resource region to be usable by each of the mobile station apparatuses 200, an intermittent transmission and reception cycle, a transmission data channel format, and a buffer situation. The modulation symbol control section 113 decides the modulation system and the coding rate to be performed on each of the data sets according to the reception quality information transmitted from the mobile station apparatus 200. The frequency selective scheduler 114 performs the processing of the frequency selective scheduling to be performed on each of the data sets according to the reception quality information transmitted from the mobile station apparatus 200.

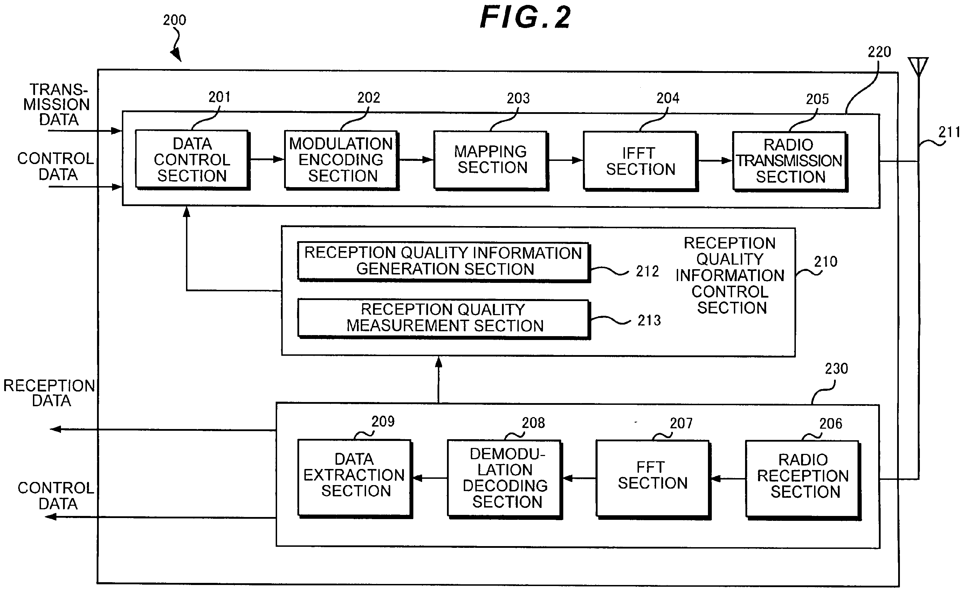

Fig. 2 is a block diagram showing an outline configuration of the mobile station apparatus 200 according to the first embodiment of the present invention. The mobile station apparatus 200 includes a data control section 201, a modulation encoding section 202, a mapping section 203, an inverse fast Fourier transform (IFFT) section 204, a radio transmission section 205, a radio reception section 206, a fast Fourier transform (FFT) section 207, a demodulation decoding section 208, a data extraction section 209, a reception quality information control section 210, and an antenna 211. The reception quality information control section 210 includes a reception quality information generation section 212 and a reception quality measurement section 213. Here, the data control section 201, the modulation encoding section 202, the mapping section 203, the inverse fast Fourier transform (IFFT) section 204 and the radio transmission section 205 constitute a transmission section 220, and the radio reception section 206, the fast Fourier transform (FFT) section 207, the demodulation decoding section 208, and the data extraction section 209 constitute a reception section 230.

In the mobile station apparatus 200, the data control section 201 receives the transmission data to be transmitted to the base station apparatus 100 and control data, and each of the data sets is transmitted sequentially to the base station apparatus 100. The modulation encoding section 202 performs modulation processing and error correction encoding processing on a signal output from the data control section 201 and outputs each of the data sets to the mapping section 203. The mapping section 203 maps the data output from the modulation encoding section 202 on each sub-carrier and outputs the result to the inverse fast Fourier transform section 204. As shown above, the 3GPP (3rd Generation Partnership Project) proposes the single carrier communication system as a communication system of information transmitted from the mobile station apparatus in an uplink in the EUTRA, and proposes the composite system of the single carrier communication system and the multi-carrier communication system in the LTE-A.

The inverse fast Fourier transform section 204 performs the inverse fast Fourier transform on a symbol sequence input from the mapping section 203 to convert the symbol sequence into a temporal sequence base band digital signal and outputs the result to the radio transmission section 205. The radio transmission section 205 performs digital/analog conversion on the signal input from the inverse fast Fourier transform section 204 and transmits the result to the base station apparatus 100 via the antenna 211 after up conversion to a frequency suitable for transmission.

The radio reception section 206 performs analog/digital conversion on a radio signal received by the antenna 211 and outputs the result to the fast Fourier transform section 207. The fast Fourier transform section 207 performs the fast Fourier transform on the signal input from the radio reception section 206 and separates the result into data sets of the respective sub-carriers to output the result to a de-mapping section which is not shown in the drawing. This de-mapping section takes out the data mapped on each of the sub-carriers and transmits the data to the demodulation decoding section 208. The demodulation decoding section 208 performs demodulation processing and error correction decoding processing on the data input from the de-mapping section and outputs the reception data after the error correction decoding to the data extraction section 209. The data extraction section 209 extracts control information designating a transmission format of uplink data from the data input from the demodulation decoding section 208 after the error correction decoding, and outputs the control information to the reception quality information control section 210. Further, the reception data except the control information and control data are output to an upper layer and the like.

The reception quality measurement section 213 calculates the reception quality of the signal received from the base station apparatus 100. The reception quality information generation section 212 generates the reception quality information to be transmitted to the base station apparatus 100 according to the information calculated by the reception quality measurement section 213.

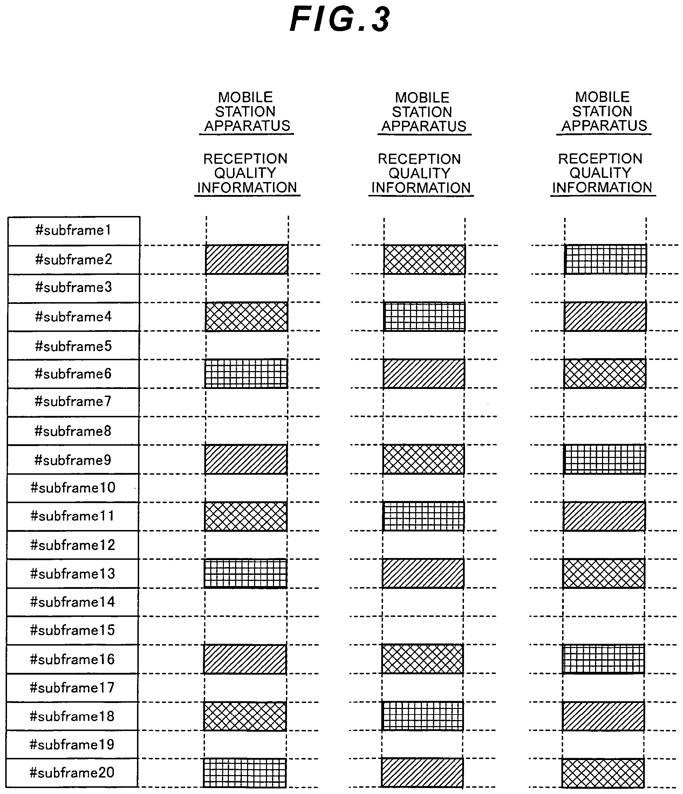

Fig. 3 is a diagram conceptually showing the reception quality information transmitted from the mobile station apparatus according to the first embodiment of the present invention, to the base station apparatus. Here, Fig. 3 shows #subframe1 to #subframe20 as an example. In the first embodiment of the present invention, it is possible to improve the frequency efficiency of the communication control (scheduling) by the base station apparatus, by causing the base station apparatus to control from which frequency band the reception quality information is obtained to be transmitted when the mobile station apparatus transmits to the base station apparatus each of the reception quality information sets obtained from the plural frequency bands.

In the following explanation, the plural frequency bands from which the mobile station apparatus obtains each of the reception quality information sets are described as the band width parts (BP1, BP2, BP3, ···), for easy understanding of the explanation. These band width parts (BP1, BP2, BP3, ···) may be divided from a whole frequency band or a wide frequency band from which the mobile station apparatus obtains the reception quality information, or may be plural discontinuous frequency bands operated as one wide-band system (frequency band aggregation) . That is, the whole frequency band or the wide frequency band is divided into the band width parts (BP1, BP2, BP3, ···) and the mobile station apparatus can transmit to the base station apparatus the plural reception quality information sets obtained from respective frequency bands of the divided band width parts. Further, the plural discontinuous frequency bands which are operated as one wide-band system by the frequency band aggregation are used as the band width parts (BP1, BP2, BP3, ···), and the mobile station apparatus can transmit to the base station apparatus the plural reception quality information sets obtained from the respective frequency bands (band width parts).

As an example for explaining the first embodiment, Fig. 3 shows that each of the three mobile station apparatuses (mobile station apparatus 1, mobile station apparatus 2, and mobile station apparatus 3) transmits the reception quality information sets obtained from the plural frequency bands (BP1, BP2, and BP3) to the base station apparatus.

In the first embodiment, the base station apparatus transmits frequency band indication information indicating from which frequency band (BP1, BP2, or BP3) the reception quality information is obtained to be transmitted first from the mobile station apparatus, by including the frequency band indication information in a radio resource control signaling (hereinafter, RRC; Radio Resource Control signaling), and the mobile station apparatus which has received this signaling transmits to the base station apparatus first the reception quality information obtained from the frequency indicated in the frequency band indication information.

In Fig. 3, the base station apparatus transmits the frequency band indication information instructing a mobile station apparatus 1 to transmit first the reception quality information obtained from BP1, by including the frequency band indication information in the RRC signaling. The mobile station apparatus 1, which has received this signaling, transmits first the reception quality information obtained from BP1 in #subframe2, and transmits to the base station apparatus the reception quality information obtained from BP2 and the reception quality information obtained from BP3 in succeeding #subframe4 and #subframe6, respectively. Fig. 3 shows that the reception quality information obtained from each of the frequency bands is similarly transmitted also in succeeding #subframe9, #subframe11, or #subframel3, and in #subframe16, #subframe18, or #subframe20.

Here, the reception quality information, which is obtained from each of the BPs and transmitted from the mobile station apparatus 1, is not necessarily transmitted in the order as shown in Fig. 3. While Fig. 3 describes that the reception quality information obtained from BP1 is first transmitted and then the reception quality information obtained from BP2 and the reception quality information obtained from BP3 are transmitted, for easy understanding of the explanation, any order may be used for transmitting the reception quality information, and, for example, the reception quality information may be transmitted in a preliminarily defined order or it is optional to transmit the reception quality information by hopping among the reception quality information sets obtained from the respective BPs according to information specific to the mobile station apparatus 1, information specific to a cell in which the mobile station apparatus 1 exists, a preliminarily defined pattern, or the like. Further, the reception quality information sets obtained from the respective BPs may be transmitted in the continuous sub-frames and the reception quality information obtained from one of the BPs may be transmitted across the plural sub-frames.

The mobile station apparatus 1 transmits first the reception quality information obtained from BP1 indicated in the frequency band indication information which is included in the RRC signaling from the base station apparatus, and then transmits the reception quality information obtained from BP2 and the reception quality obtained from BP3. In Fig. 3, the mobile station apparatus 1 transmits the reception quality information obtained each of the BPs periodically.

Similarly, the base station apparatus transmits the frequency band indication information instructing a mobile station apparatus 2 to transmit the reception quality information obtained from BP2, by including the frequency band indication information in the RRC signaling, and the mobile station apparatus 2, which has received this signaling, transmits first the reception quality information obtained from BP2 in #subframe2, and then sequentially transmits the reception quality information obtained from BP3 in #subframe4 and the reception quality information obtained from BP1 in #subframe6. This example shows that the reception quality information obtained from each of the frequency bands is sequentially transmitted similarly also in succeeding #subframe9, #subframe11, or #subframe13, and #subframe16, #subframe18, or #subframe20.

Further, the base station apparatus transmits the frequency band indication information instructing a mobile station apparatus 3 to transmit the reception quality information obtained from BP3, by including the frequency band indication information in the RRC signaling, and the mobile station apparatus 3, which has received this signaling, transmits first the reception quality information obtained from BP3 in #subframe2, and then sequentially transmits the reception quality information obtained from BP1 in "subframe4 and the reception quality information obtained from BP2 in #subframe6. This example shows that the reception quality information obtained from each of the frequency bands is sequentially transmitted similarly also in succeeding #subframe9, #subframe11, or #subframe13, and #subframel6, #subframe18, or #subframe20.

Also for the case of the mobile station apparatus 2 or the mobile station apparatus 3, any order may be used for transmitting the reception quality information obtained from each of the BPs, and, for example, the reception quality information may be transmitted in a preliminarily defined order or it is optional to transmit the reception quality information by hopping among the reception quality information sets obtained from the respective BPs according to information specific to the mobile station apparatus 2 or the mobile station apparatus 3, information specific to a cell in which the mobile station apparatus 2 or the mobile station apparatus 3 exists, a preliminarily defined pattern, or the like. Further, the reception quality information sets obtained from the respective BPs may be transmitted in the continuous sub-frames and the reception quality information obtained from one of the BPs may be transmitted across the plural sub-frames. Each of the mobile station apparatus 2 and the mobile station apparatus 3 transmits first the reception quality information obtained from the BP indicated in the frequency band indication information which is included in the RRC signaling from the base station apparatus (BP2 or BP3) and then sequentially transmits the reception quality information sets obtained from the other BPs. In Fig. 3, each of the mobile station apparatus 2 and the mobile station apparatus 3 transmits the reception quality information obtained from each of the BPs periodically

The base station apparatus can designate the frequency band indication information, which instructs each of the mobile station apparatuses about the frequency band from which the reception quality information is obtained to be transmitted first, in consideration of the number of the mobile station apparatuses existing in a cell, information traffic amounts in the uplink and the downlink, interference with another neighboring cell (interference coordination), and the like, for example. For the interference with another cell (interference coordination), in a cell 1, a cell 2, and a cell 3 neighboring one another, for example, the base station apparatuses in the respective cells teach one another that the mobile station apparatus 1 exists at the edge of cell 1, the mobile station apparatus 2 exists at the edge of cell 2, and the mobile station apparatus 3 exists at the edge of cell 3, by using interfaces between the base station apparatuses, and cause the mobile station apparatus 1 to transmit first the reception quality information obtained from BP1, cause the mobile station apparatus 2 to transmit first the reception quality information obtained from BP2, and cause the mobile station apparatus 3 to transmit first the reception quality information obtained from BP3, in order to reduce the interference among the cells by allocating information to be transmitted to each of the mobile station apparatuses in the downlink to the resource distributed among BP1, BP2, and BP3.

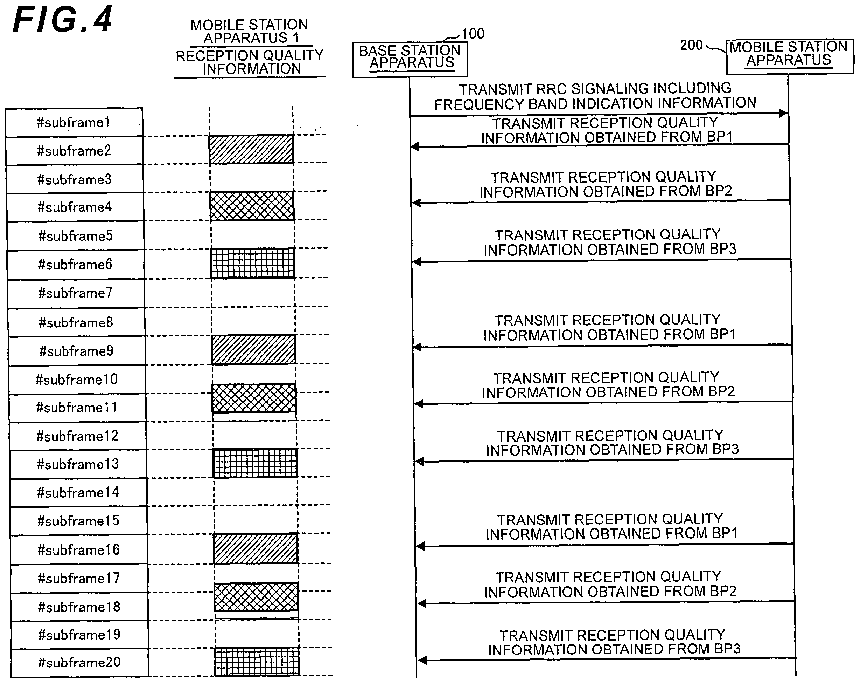

Fig. 4 is a diagram for explaining the first embodiment and a flowchart showing a processing sequence. The base station apparatus transmits in #subframe1 the RRC signaling including the frequency band indication information instructing the mobile station apparatus 1 about from which frequency band (BP1, BP2, or BP3) the reception quality information is obtained to be transmitted first. While the RRC signaling including the band indication information is transmitted from the base station apparatus in #subframe1 in Fig. 4, the frequency band from which the mobile station apparatus 1, for example, obtains the reception quality information may be defined as an initial value and the frequency band from which the reception quality information is obtained to be transmitted first from the mobile station apparatus may be indicated by the transmission of the RRC signaling including the frequency band indication information in the succeeding sub-frame. Here, the base station apparatus is assumed to instruct the mobile station apparatus 1 to transmit first the reception quality information obtained from BP1. The mobile station apparatus 1, which has received this signaling, transmits first the reception quality information obtained from BP1 to the base station apparatus in #subframe2. In this example, the mobile station apparatus 1 transmits the reception quality information obtained from BP2 in succeeding #subframe4 and transmits the reception quality information obtained from BP3 in #subframe6.

In this example, in succeeding #subframe9, #subframe11, and #subframe13, and in #subframe16, #subframe18, and #subframe20, the mobile station apparatus 1 similarly transmits first the reception quality information obtained from BP1 and then transmits the reception quality information sets obtained from BP2 and BP3, periodically. Similar processing is subjected to the mobile station apparatus 2 and the mobile station apparatus 3, that is, the base station apparatus transmits the RRC signaling including the frequency band indication information, and the mobile station apparatus which has received the signaling transmits first the reception quality information obtained from the BP (BP1, BP2, or BP3) which is indicated in the frequency band indication information and transmits to the base station apparatus the reception quality information sets obtained from the other BPs (BP1, BP2, or BP3) in the succeeding sub-frames, periodically.

Here, the frequency band indication information from the base station apparatus may not be included in the RRC signaling as explicit information but can be represented by the use of the other information. For example, each of the mobile station apparatuses, which is set up by the RRC signaling from the base station apparatus, may be instructed according to the setting of the sub-frame for reception quality information transmission (offset value: setting for in which sub-frame the reception quality information is transmitted). Explaining with an example, the base station apparatus can set the sub-frame (offset value) so as to cause the mobile station apparatus 1 to transmit the reception quality information in #subframe2. The mobile station apparatus 1, which has received this signaling, transmits first the reception quality information obtained from BP1 according to the setting from the base station apparatus.

Similarly, the base station apparatus can set the sub-frame (offset value) so as to cause the mobile station apparatus 2 to transmit the reception quality information in #subframe5. The mobile station apparatus 2, which has received this signaling, transmits the reception quality information obtained from BP2 according to the setting from the base station apparatus. Further, the base station apparatus can set the offset value so as to cause the mobile station apparatus 3 to transmit the reception quality information in #subframe7. The mobile station apparatus 3, which has received this signaling, transmits the reception quality information obtained from BP3 according to the setting from the base station apparatus. It is defined preliminarily in a specification that from which BP the reception quality information is obtained to be transmitted first from the mobile station apparatus at what value of the sub-frame set by the base station apparatus (offset value).

As shown above, the base station apparatus transmits the frequency band indication information indicating from which frequency band the reception quality information is obtained to be transmitted first, by including the frequency band indication information in the RRC signaling, and the mobile station apparatus which has received this signaling transmits first the reception quality information obtained from the BP indicated in the frequency band indication information, to the base station apparatus, and thereby the base station apparatus can control from which BP the reception quality information is obtained to be transmitted and it is possible to distribute at random the BP for obtaining the reception quality information to be transmitted from the mobile station apparatus. Accordingly, the base station apparatus can efficiently use all the resources (frequency bands) to be allocatable to the mobile station apparatuses when performing the processing of the adaptive modulation and coding and the frequency selective scheduling on the information to be transmitted in the downlink according to the reception quality information transmitted from the mobile station apparatus, and, as a result, it becomes possible to improve the frequency efficiency of the communication control (scheduling) performed by the base station apparatus between the base station apparatus and the mobile station apparatus.

### (Second embodiment)

Next, a second embodiment of the present invention will be described. The apparatus configuration of the second embodiment of the present invention is the same as that shown in the first embodiment.

In the second embodiment of the present invention, the mobile station apparatus can calculate from which frequency band the reception quality information is obtained to be transmitted first, according to information specific to the mobile station apparatus, when transmitting to the base station apparatus each of the reception quality information sets obtained from the plural frequency bands. It is possible to distribute at random the frequency bands from which the reception quality information is obtained to be transmitted, by calculating from which frequency band is obtained to be transmitted first according to the information specific to the mobile station apparatus, and, as a result, it is possible to improve the frequency efficiency of the communication control (scheduling) by the base station apparatus. The information specific to the mobile station apparatus is, for example, a specific ID (UE-ID) owned by the mobile station apparatus or a specific group ID allocated to the mobile station apparatus by the base station apparatus.

The mobile station apparatus can calculate first from which frequency band the reception quality information is obtained to be transmitted, from the information specific to the mobile station apparatus. For example, the mobile station apparatus can transmit first the reception quality information obtained from BP1 according to a value calculated by performing remainder (mod) operation for the ID specific to the mobile station apparatus. It is preliminarily defined in the specification what operation is to be performed for the ID specific to the mobile station apparatus and from which BP the reception quality information is obtained to be transmitted first according to the calculated operation result.

Explaining by using Fig. 3, the mobile station apparatus 1 can transmit first the reception quality information obtained from BP1 in #subframe2 according to a value calculated by performing the remainder (mod) operation for the ID specific to the mobile station apparatus, for example. Similarly, the mobile station apparatus 2 can transmit first the reception quality information obtained from BP2 in #subframe2 according to a value calculated by performing the remainder (mod) operation for the ID specific to the mobile station apparatus, for example. Further, the mobile station apparatus 3 can transmit first the reception quality information obtained from BP3 in #subframe2 according to a value calculated by performing the remainder (mod) operation for the ID specific to the mobile station apparatus, for example.

Here, from which BP the reception quality information is obtained to be transmitted first from the mobile station apparatus may be calculated according to sub-frame setting (offset value) from the base station apparatus for the transmission of the reception quality information, in addition to the information specific to the mobile station apparatus. Explaining with an example, the base station apparatus can set the sub-frame (offset value) so as to cause the mobile station apparatus 1 to transmit the reception quality information in #subframe2. The mobile station apparatus 1, which has received this signaling, can transmit first the reception quality information obtained from BP1 according to the information specific to the mobile station apparatus and the sub-frame (offset value) set by the base station apparatus for the transmission of the reception quality information.

Similarly, the base station apparatus can set the sub-frame (offset value) so as to cause the mobile station apparatus 2 to transmit the reception quality information in #subframe2. The mobile station apparatus 2, which has received this signaling, can transmit first the reception quality information obtained from BP2 according to the information specific to the mobile station apparatus and the sub-frame (offset value) set by the base station apparatus for the transmission of the reception quality information. Further, the base station apparatus can set the sub-frame (offset value) so as to cause the mobile station apparatus 3 to transmit the reception quality information in #subframe2. The mobile station apparatus 3, which has received this signaling, can transmit first the reception quality information obtained from BP3 according to the information specific to the mobile station apparatus and the sub-frame (offset value) set by the base station apparatus for the transmission of the reception quality information. Here, obviously the base station apparatus can set the different sub-frames (offset values) for the mobile station apparatus 1, the mobile station apparatus 2, and the mobile station apparatus 3, respectively. The information specific to the mobile station apparatus is preliminarily defined in the specification, and also it is preliminarily defined in the specification what operation is to be performed for the sub-frame (offset value) set by the RRC signaling from the base station apparatus and from which BP the reception quality information is obtained to be transmitted first according to the obtained operation result.

As shown above, the mobile station apparatus calculates from which frequency band the reception quality information is obtained to be transmitted first when transmitting each of the reception quality information sets obtained from the plural frequency bands, and thereby it is possible to distribute at random the frequency bands from which the reception quality information is obtained to be transmitted and, as a result, the base station apparatus can efficiently use all the resources (frequency bands) to be allocatable to the mobile station apparatus. The mobile station apparatus calculates from which frequency band the reception quality information is obtained to be transmitted, by calculating the information specific to the mobile station apparatus without being controlled by the RRC signaling from the base station apparatus, and thereby each of the mobile station apparatuses can transmit the reception quality information obtained from the different frequency band at the same timing without requiring new information to be added to the RRC signaling transmitted in the downlink. It is possible to improve the frequency efficiency of the communication control (scheduling) by the base station apparatus, by distributing at random the frequency bands from which the reception quality information is obtained to be transmitted by the mobile station apparatus, according to the information specific to the mobile station apparatus.

### (Third embodiment)

Next, a third embodiment of the present invention will be explained. The apparatus configuration of the third embodiment of the present invention is the same as that shown in the first embodiment.

In the third embodiment of the present invention, the mobile station apparatus transmits first the reception quality information obtained from the frequency band which is selected in the mobile station apparatus when transmitting each of the reception quality information sets obtained from the plural frequency bands. BY simply transmitting first the reception quality information calculated from the frequency band which is selected by each of the mobile station apparatuses, it is possible to distribute at random the frequency bands from which the reception quality information is obtained to be transmitted (each of the mobile station apparatuses selects at random the frequency band from which the reception quality information is obtained), and, as a result, it is possible to improve the frequency efficiency of the communication control (scheduling) by the base station apparatus. When transmitting the reception quality information obtained from the selected frequency band to the base station apparatus, the mobile station apparatus transmits information indicating from which frequency band the reception quality information has been obtained to be transmitted (e.g., information indicating the position of the selected frequency band) together with the reception quality information to the base station apparatus.

Explaining by using Fig. 3, the mobile station apparatus 1 can select BP1 in #subframe2 and transmit first the reception quality information obtained from BP1 and the information indicating that BP1 has been selected (e.g., information indicating the position of BP1). Similarly, the mobile station apparatus 2 can select BP2 in #subframe2 and transmit first the reception quality information obtained from BP2 and the information indicating that BP2 has been selected (e.g., information indicating the position of BP2) . Further, the mobile station apparatus 3 can select BP3 in #subframe2 and transmit first the reception quality information obtained from BP3 and the information indicating that BP3 has been selected.

As shown above, when the mobile station apparatus transmits to the base station apparatus respective reception quality information sets obtained from the plural frequency bands, each of the mobile station apparatuses can transmit the reception quality information obtained from the different frequency band at the same timing without requiring new information to be added to the RRC signaling transmitted in the downlink, by simply transmitting the reception quality information obtained from the frequency band selected by the mobile station apparatus without the information indicating, from which frequency band the reception quality information is obtained to be transmitted first, included in the RRC signaling from the base station apparatus. By transmitting the reception quality information obtained from the frequency band which is selected by each of the mobile station apparatuses, it is possible to distribute at random the frequency bands from which the reception quality information is obtained to be transmitted and the base station apparatus can efficiently use all the resources (frequency bands) to be allocatable to the mobile station apparatuses. Further, the base station apparatus can allocate the resource having a good channel quality (good channel state) preferentially to each of the mobile station apparatuses according to the reception quality information from the mobile station apparatus and it is possible to improve the efficiency of the communication control (scheduling) between the base station apparatus and the mobile station apparatus.

### (Fourth embodiment)

On the basis of the above described first embodiment, second embodiment, and third embodiment of the present invention, a fourth embodiment of the present invention will be explained. The apparatus configuration of the fourth embodiment of the present invention is the same as that shown in the first embodiment.

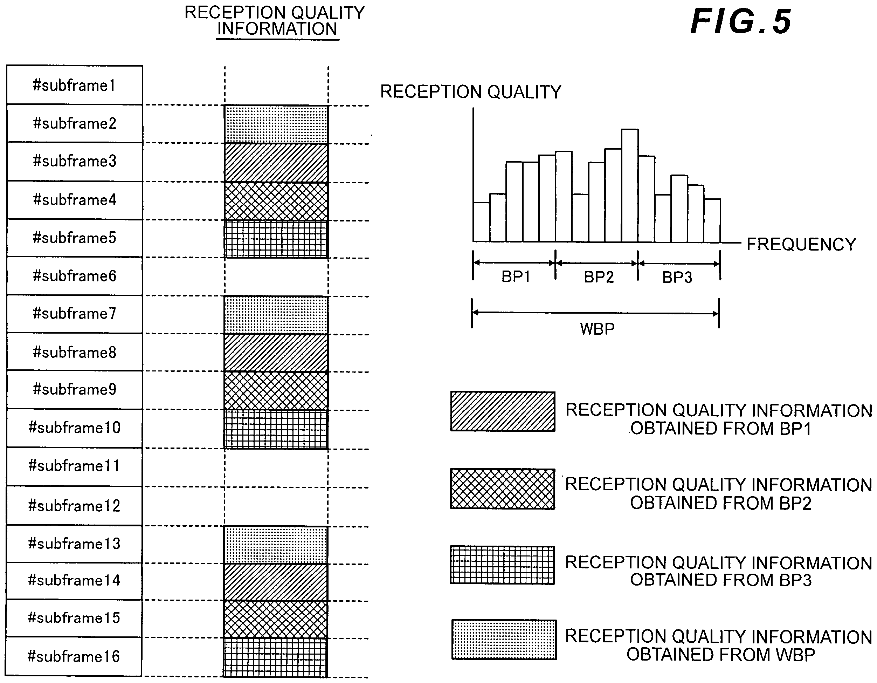

Fig. 5 conceptually shows the reception quality information transmitted from the mobile station apparatus according to the fourth embodiment of the present invention, to the base station apparatus (left side) and the state that the mobile station apparatus obtains each of the reception quality information sets from the plural frequency bands (right side). In Fig. 5, the mobile station apparatus transmits each of the reception quality information sets obtained from the plural frequency bands (BP1, BP2, and BP3) to the base station apparatus (transmits the reception quality information obtained from BP1 in #subframe3, transmits the reception quality information obtained from BP2 in #subframe4, and transmits the reception quality information obtained from BP3 in #subframe5), and also transmits the reception quality information obtained from the whole frequency band or the wide frequency band (wide band part called "WBP" hereinafter) (transmits the reception quality information obtained from the WBP in #subframe2).

Here, among the reception quality information sets transmitted from the mobile station apparatus, the reception quality information shown with dotted lines indicates the reception quality information obtained from the WBP and the reception quality information shown with hatching indicates the reception quality information obtained from BP1. Further, the reception quality information shown with a mesh indicates the reception quality obtained from BP2 and the reception quality information shown with a grid indicates the reception quality information obtained from BP3.

Here, each of the reception quality information sets transmitted from the mobile station apparatus (reception quality information sets obtained from the WBP, BP1, BP2, and BP3) may be transmitted in the continuous sub-frames or may be transmitted across the plural sub-frames. Further, the transmission repetition rate of the reception quality information obtained from the WBP and the transmission repetition rate of the reception quality information obtained each of the BPs (BP1, BP2, or BP3) may be different. Fig. 5 shows that the reception quality information sets obtained from the WBP, BP1, BP2, and BP3 are transmitted periodically in the continuous sub-frames, as an example.

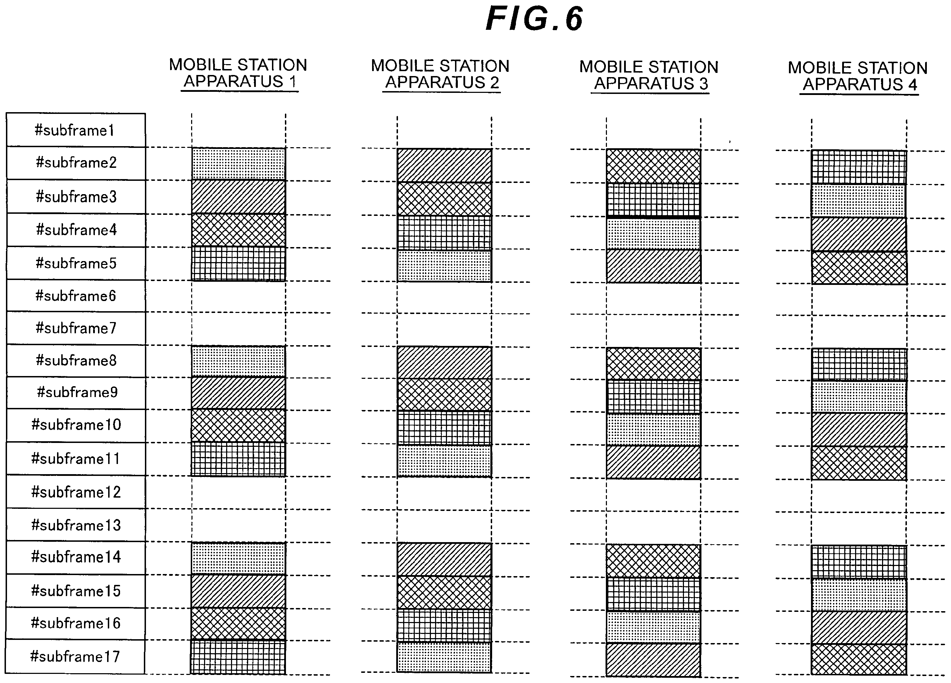

Fig. 6 conceptually shows the reception quality information transmitted from the mobile station apparatus according to the fourth embodiment of the present invention, to the base station apparatus. Here, #subframe1 to #subframe17 are shown as an example.

In the fourth embodiment of the present invention, when the mobile station apparatus transmits the reception quality information obtained from the whole frequency band or the wide frequency band (WBP) and the reception quality information sets obtained from the respective frequency bands (respective BPs), it is possible to distribute the frequency bands from which the reception quality information is obtained to be transmitted by controlling from which frequency band (WBP, BP1, BP2, or BP3) the reception quality information is obtained to be transmitted, and, as a result, it is possible to improve the frequency efficiency of the communication control (scheduling) by the base station apparatus.

Fig. 6 shows, as an example for explaining the fourth embodiment of the present invention, the state that each of the four mobile station apparatuses (mobile station apparatus 1, mobile station apparatus 2, mobile station apparatus 3, and mobile station apparatus 4) transmits the reception quality information obtained from the whole frequency band or the wide frequency band (WBP) and each of the reception quality information sets obtained from the respective frequency bands (respective BPs).

In the fourth embodiment of the present invention, the base station apparatus transmits to the mobile station apparatus the frequency band indication information indicating from what frequency band including the WBP (i.e., which of WBP, BP1, BP2, and BP3) the reception quality information is obtained to be transmitted first, by including the frequency band indication information in the RRC signaling, and the mobile station apparatus which has received this signaling transmits to the base station apparatus first the reception quality information obtained from the frequency band which is indicated in the frequency band indication information.

Here, the frequency band indication information included in the RRC signaling may be any information in which the base station apparatus instructs the mobile station apparatus about from which band including the WBP the reception quality information is obtained to be transmitted first.

In Fig. 6, the base station apparatus transmits the frequency band indication information instructing the mobile station apparatus 1 to transmit the reception quality information obtained from BP1, by including the frequency band indication information in the RRC signaling. The mobile station apparatus 1, which has received this signaling, transmits the reception quality information obtained from the WBP in #subframe2, and, in succeeding #subframe3, #subframe4, and #subframe5, the mobile station apparatus 1 transmits to the base station apparatus the reception quality information obtained from BP1, the reception quality information obtained from BP2, and the reception quality information obtained from BP3, respectively.

As explained in the first embodiment, the reception quality information transmitted from the mobile station apparatus 1 may not be transmitted in the order as shown in Fig. 6. While, for easy understanding of explanation, Fig. 6 describes that the mobile station apparatus 1 transmits first the reception quality information obtained from the WBP and then transmits the reception quality information obtained from BP1, the reception quality information obtained from BP2, and the reception quality information obtained from BP3, any order may be used for transmitting the reception quality information, and the reception quality information may be transmitted in a preliminarily defined order or it is optional to transmit the reception quality information by hopping among the reception quality information sets according to information specific to the mobile station apparatus 1, information specific to the cell in which the mobile station apparatus 1 exists, a preliminarily defined pattern, or the like. Further, each of the reception quality information sets may be transmitted in the continuous sub-frames or each of the reception quality information sets may be transmitted across the plural sub-frames.

The mobile station apparatus 1 transmits first the reception quality information obtained from the WBP indicated in the frequency band indication information included in the RRC signaling from the base station apparatus, and then transmits the reception quality information obtained from each of the BPs (BP1, BP2, and BP3). In Fig. 6, the mobile station apparatus 1 transmits each of the reception quality information sets periodically.

Similarly, the base station apparatus transmits the frequency band indication information instructing the mobile station apparatus 2 to transmit first the reception quality information obtained from BP1 by including the frequency band indication information in the RRC signaling, and the mobile station apparatus 2, which has received this signaling, transmits the reception quality information obtained from BP1 in #subframe2 and then sequentially transmits the reception quality information obtained from BP2, the reception quality information obtained from BP3, and the reception quality information obtained from the WBP in #subframe3, #subframe4, and #subframe5, respectively. This example shows that the mobile station apparatus 2 sequentially transmits each of the reception quality information sets similarly in succeeding #subframe8, #subframe9, #subframe10, or #subframe11, and #subframe14, #subframe15, #subframe16, or #subframe17. In Fig. 6, the mobile station apparatus 2 transmits each of the reception quality information sets periodically.

Similarly, the base station apparatus transmits the frequency band indication information instructing the mobile station apparatus 3 to transmit the reception quality information obtained from BP2 by including the frequency band indication information in the RRC signaling, and the mobile station apparatus 3, which has received this signaling, transmits the reception quality information obtained from BP2 in #subframe2 and then sequentially transmits the reception quality information obtained from BP3, the reception quality information obtained from the WBP, and the reception quality information obtained from BP1 in #subframe3, #subframe4, and #subframe5, respectively. In this example, the mobile station apparatus 3 sequentially transmits each of the reception quality information sets similarly in succeeding #subframe8, #subframe9, #subframe10, or #subframe11, and #subframe14, #subframe15, #subframe16, or #subframe17. In Fig. 6, the mobile station apparatus 3 transmits each of the reception quality information sets periodically.

Similarly, the base station apparatus transmits the frequency band indication information instructing the mobile station apparatus 4 to transmit the reception quality information obtained from BP3 by including the frequency band indication information in the RRC signaling, and the mobile station apparatus 4, which has received this signaling, transmits the reception quality information obtained from BP3 in #subframe2 and then sequentially transmits the reception quality information obtained from the WBP, the reception quality information obtained from BP1, and the reception quality information obtained from BP2 in #subframe3, #subframe4, and #subframe5, respectively. In this example, the mobile station apparatus 4 sequentially transmits each of the reception quality information sets similarly in succeeding #subframe8, #subframe9, #subframe10, or #subframe11, and #subframe14, #subframe15, #subframe16, or #subframe17. In Fig. 6, the mobile station apparatus 4 transmits each of the reception quality information sets periodically.

As described in the first embodiment, the base station apparatus can decide the frequency band indication information instructing each of the mobile station apparatuses about from which frequency band the reception quality information is obtained to be transmitted first, in consideration of the number of the mobile station apparatuses existing in the cell, information traffic in the uplink and the downlink, interference with another cell (interference coordination), and the like, for example.

Here, as with the first embodiment, the frequency band indication information from the base station apparatus may be represented by the use of the other information without being included in the RRC signaling as explicit information. For example, the indication to the mobile station apparatus from the base station apparatus, from which frequency band the reception quality information is obtained to be transmitted first, may be performed according to the setting of the RRC signaling about the sub-frame (offset value) for the transmission of the reception quality information. Explaining with an example, the base station apparatus can set the sub-frame (offset value) so as to cause the mobile station apparatus 1 to transmit the reception quality information in #subframe2, for example.

The mobile station apparatus 1, which has received this signaling, transmits first the reception quality information obtained from the WBP according to the sub-frame (offset value) set by the base station apparatus. Similarly, the base station apparatus can set the sub-frames (offset values) so as to cause the mobile station apparatus 2, mobile station apparatus 3, and mobile station apparatus 4 to transmit the reception quality information sets, for example, in #subframe5, #subframe7, and #subframe10, respectively. Each of the mobile station apparatuses (mobile station apparatus 2, mobile station apparatus 3, and mobile station apparatus 4) transmits first the reception quality information obtained from each of the frequency bands (BP1, BP2, and BP3) according to the sub-frame (offset value) set by the base station apparatus. It is preliminarily defined in the specification from which frequency band (WBP, BP1, BP2, or BP3) the reception quality information is obtained to be transmitted from the mobile station apparatus at what sub-frame value (offset value) set in the RRC signaling by the base station apparatus.

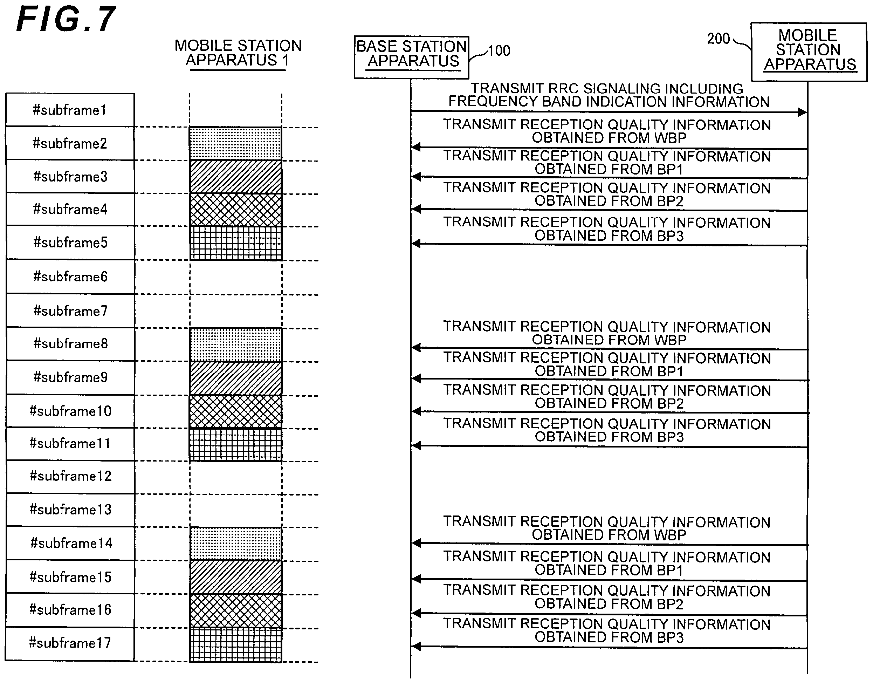

Fig. 7 is a flowchart showing a diagram and a processing sequence for explaining the fourth embodiment. The base station apparatus transmits, to the mobile station apparatus 1 in #subframe1, the RRC signaling including the frequency band indication information indicating from which frequency band (WBP, BP1, BP2, or BP3) the reception quality information is obtained to be transmitted first. While the RRC signaling including the band designation information from the base station apparatus is transmitted in #subframe1 in Fig. 7, the frequency band from which the mobile station apparatus 1, for example, obtains the reception quality information may be defined as an initial value and then the frequency band in which the mobile station apparatus transmits the reception quality information may be indicated by the RRC signaling including the frequency band indication information transmitted in the succeeding sub-frame. Here, the base station apparatus is assumed to instruct the mobile station apparatus 1 to transmit first the reception quality information obtained from the WBP. The mobile station apparatus 1, which has received this signaling, transmits first the reception quality information obtained from the WBP to the base station apparatus in #subframe2.

In this example, the mobile station apparatus 1 transmits the reception quality information obtained from BP1 in succeeding #subframe3, transmits the reception quality information obtained from BP2 in #subframe4, and transmits the reception quality information obtained from BP3 in #subframe5. Similarly, the mobile station apparatus 1 transmits first the reception quality information obtained from the WBP, and transmits the reception quality information obtained from BP1, the reception quality information obtained from BP2, and the reception quality information obtained from BP3 also in #subframe8, #subframe9, #subframe10, and #subframe11, respectively, and in #subframe14, #subframe15, #subframe16, #subframe17, respectively.

Further, in the fourth embodiment of the present invention, the mobile station apparatus can calculate from which frequency band (WBP, BP1, BP2, or BP3) the reception quality information is obtained to be transmitted according to the information specific to the mobile station apparatus. The information specific to the mobile station apparatus is, for example, a specific ID owned by the mobile station apparatus or a specific group ID allocated to the mobile station apparatus by the base station apparatus. The mobile station apparatus can calculate from which frequency band (WBP, BP1, BP2, or BP3) the reception quality information is obtained to be transmitted according to the information specific to the mobile station apparatus when transmitting the reception quality information obtained from each of the frequency bands.

For example, the mobile station apparatus can transmit first the reception quality information obtained from the WBP, according to the value calculated from the remainder (mod) operation of the ID specific to the mobile station apparatus. It is preliminarily defined in the specification from which frequency band the reception quality information is obtained to be transmitted first, according to the result of what operation performed for the ID specific to the mobile station apparatus.

Explaining by using Fig. 6, the mobile station apparatus 1 can transmit first the reception quality information obtained from the WBP, according to the value calculated from the remainder (mod) operation of the ID specific to the mobile station apparatus, in #subframe2. Similarly, the mobile station apparatus 2, mobile station apparatus 3, and mobile station apparatus 4 can transmit the reception quality information obtained from BP1, the reception quality information obtained from BP2, and the reception quality information obtained from BP3, respectively, according to the value calculated from the remainder (mod) operation of the ID specific to the mobile station apparatus, for example, in #subframe2.

Here, as with the second embodiment, from which frequency band (WBP, BP1, BP2, or BP3) the reception quality information is obtained to be transmitted from the mobile station apparatus may be calculated according to the setting of the sub-frame (offset value) which is transmitted from the base station apparatus for the transmission of the reception quality information, in addition to the information specific to the mobile station apparatus. Explaining with an example, the base station apparatus can set the sub-frame (offset value) so as to cause the mobile station apparatus 1 to transmit the reception quality information in #subframe2, for example. The mobile station apparatus 1 can transmit first the reception quality information obtained from the WBP, according to the information specific to the mobile station apparatus and the sub-frame (offset value) set by the base station apparatus.

Similarly, the base station apparatus can set the sub-frame (offset value) so as to cause each of the mobile station apparatus 2, mobile station apparatus 3, and mobile station apparatus 4 to transmit the reception quality information in #subframe2. The mobile station apparatus 2, mobile station apparatus 3, and mobile station apparatus 4 can transmit first the reception quality information sets obtained from BP1, BP2, and BP3, respectively, according to the information specific to the mobile station apparatus and the sub-frame (offset value) from the base station apparatus. Here, obviously the base station apparatus can set the different sub-frames (offset values) among the mobile station apparatus 2, mobile station apparatus 3, and mobile station apparatus 4. It is preliminarily defined in the specification from which frequency band the reception quality information is obtained to be transmitted first, according to the result of what operation is performed for the information specific to the mobile station apparatus and the sub-frame (offset value) set by the RRC signaling from the base station apparatus.

Further, in the fourth embodiment of the present invention, the mobile station apparatus can simply transmit the reception quality information obtained from the frequency band selected by the mobile station apparatus when transmitting each of the reception quality information sets obtained from the plural frequency bands.

Explaining by using Fig. 6, the mobile station apparatus 1 can select the WBP and transmit first the reception quality information obtained from the WBP and information indicating that the WBP has been selected (e.g., information indicating the position of the WBP), in #subframe2. Similarly, the mobile station apparatus 2, mobile station apparatus 3, and mobile station apparatus 4 can select BP1, BP2, and BP3, respectively, and can transmit first the respective reception quality information sets and the respective information sets indicating that BP1, BP2, or BP3 has been selected.

In this manner, by controlling from which frequency band (WBP, BP1, BP2, or BP3) the reception quality information is obtained to be transmitted first by the mobile station apparatus, it is possible to distribute at random the frequency bands for obtaining the reception quality information to be transmitted and the base station apparatus can use all the resources (frequency bands) to be allocatable to the mobile station apparatuses. Here, the base station apparatus can set the mobile station apparatus to transmit first the reception quality information obtained from the whole frequency band or the wide frequency band, for example, and can indicate from which frequency band among the other frequency bands (BP1, BP2, and BP3) the reception quality information is obtained to be transmitted, by using the method which has been described above. That is, the base station apparatus performs the setting to cause the mobile station apparatus to transmit the reception quality information obtained from the WBP, and further performs the indication from which frequency band (BP1, BP2, or BP3) the reception quality information is obtained to be transmitted first, by using the method which has been described above.

As shown above, the base station apparatus transmits, to the mobile station apparatus, the frequency band indication information indicating from which frequency band the reception quality information is obtained to be transmitted first among the plural frequency bands including the whole frequency band or the wide frequency band (WBP, BP1, BP2, and BP3), by including the frequency band indication information in the RRC signaling, and the mobile station apparatus which has received this signaling transmits first the reception quality information obtained from the frequency band which is indicated in the frequency band indication information, to the base station apparatus, and thereby the base station apparatus can control from which frequency band the reception quality information is obtained to be transmitted and can cause the mobile station apparatus to perform the transmission by distributing at random the frequency bands for obtaining the reception quality information. Accordingly, the base station apparatus, which performs the processing of the adaptive modulation and coding and the frequency selective scheduling on the information transmitted in the downlink, can efficiently use all the resources (frequency bands) to be allocatable to the mobile station apparatuses, and, as a result, it is possible to improve the frequency efficiency of the communication control (scheduling) performed by the base station apparatus between the base station apparatus and the mobile station apparatus.

Further, by calculating the information instructing the mobile station apparatus about from which frequency band the reception quality information is obtained to be transmitted among the plural frequency bands including the whole frequency band or the wide frequency band (WBP, BP1, BP 2, and BP3), according to the information specific to the mobile station apparatus without the information included in the RRC signaling, each of the mobile station apparatuses can perform the transmission by distributing at random the frequency bands for obtaining the reception quality information without requiring new information to be added to the RRC signaling transmitted in the downlink. Thereby, each of the mobile station apparatuses can transmit each of the reception quality information sets obtained from the different frequency bands at the same timing without increasing the information transmitted in the downlink (information included in the RRC signaling). The mobile station apparatus can decide from which frequency band the reception quality information is obtained to be transmitted, according to a calculation method defined preliminarily in the specification or the like.

Further, by transmitting first the reception quality information obtained from the frequency band simply selected by the mobile station apparatus from the plural frequency bands including the whole frequency band or the wide frequency band (WBP, BP1, BP2, and BP3), the mobile station apparatus can distribute at random the frequency bands (WBP, BP1, BP2, or BP3) from which the reception quality information is obtained to be transmitted, without new information to be added to the RRC signaling.

## Claims

1. A base station apparatus (100) which periodically receives, from a mobile station apparatus (200), reception quality information with respect to each of a plurality of frequency bands which are aggregated, said base station apparatus (100) **characterized by** comprising:
a transmission information control section (110) configured to configure, for said mobile station apparatus (200), information which is specific to the mobile station apparatus (200) and which allows the mobile station apparatus (200) to decide from the plurality of frequency bands, a single frequency band for which reception quality information is to be transmitted in a subframe, in a case that the reception quality information with regard to each of the plurality of frequency bands is obtained by the mobile station apparatus (200) in the subframe; and
a reception section (130) configured to receive in the subframe, from the mobile station apparatus (200), the reception quality information with regard to the single frequency band decided by the mobile station apparatus (200) to be transmitted in the subframe, according to the information which is specific to the mobile station apparatus (200).

2. The base station apparatus (100) according to claim 1, wherein
the reception section is configured to receive, from the mobile station apparatus (200), on a physical uplink control channel, the reception quality information with regard to the single frequency band.

3. A mobile station apparatus (200) which periodically transmits, to a base station apparatus (100), reception quality information with respect to each of a plurality of frequency bands which are aggregated, the mobile station apparatus (200) comprising:
a reception quality information control section (210) configured to decide a single frequency band from the plurality of frequency bands according to information which is specific to the mobile station apparatus (200) and which is configured by the base station apparatus (100) in a case that the reception quality information with regard to each of the plurality of frequency bands is obtained in a subframe; and
a transmission section (220) configured to transmit to the base station apparatus (100) in the subframe, the reception quality information with regard to the single frequency band decided by the reception quality information control section (210).

4. The mobile station apparatus (200)according to claim 3, wherein the transmission section (220) is configured to transmit the reception quality information with regard to the single frequency band to the base station apparatus (100) on a physical uplink control channel.

5. A communication method performed by a base station apparatus (100) which periodically receives, from a mobile station apparatus (200), reception quality information with respect to each of a plurality of frequency bands which are aggregated, the communication method comprising:
configuring, for the mobile station apparatus (200), information which is specific to the mobile station apparatus (200) and which allows the mobile station apparatus (200) to decide from the plurality of frequency bands, a single frequency band for which reception quality information is to be transmitted in a subframe, in a case that the reception quality information with regard to each of the plurality of frequency bands is obtained by the mobile station apparatus (200) in the subframe; and
receiving in the subframe, from the mobile station apparatus (200), the reception quality information with regard to the single frequency band decided by the mobile station apparatus (200) to be transmitted in the subframe according to the information which is specific to the mobile station apparatus (200).

6. The communication method according to claim 5, wherein the reception quality information with regard to the single frequency band is received from the mobile station apparatus (200) on a physical uplink control channel.

7. A communication method performed by a mobile station apparatus (200) which periodically transmits, to a base station apparatus (100), reception quality information with respect to each of a plurality of frequency bands which are aggregated, the communication method comprising:
in a case that the reception quality information with regard to each of the plurality of frequency bands is obtained in a subframe,
deciding a single frequency band from the plurality of frequency bands according to information which is specific to the mobile station apparatus (200) and which is configured by the base station apparatus (100); and
transmitting to the base station apparatus (100) in the subframe, the reception quality information with regard to the single frequency band decided by the reception quality information control section (210).

8. The communication method according to claim 7, wherein the reception quality information with regard to the single frequency band decided is transmitted to the base station apparatus (100) on a physical uplink control channel.

## Patentansprüche

1. Basisstationsvorrichtung (100), welche von einer Mobilstationsvorrichtung (200) periodisch eine Empfangsqualitätsinformation bezüglich jedes einer Vielzahl von Frequenzbändern empfängt, die aggregiert sind, wobei die Basisstationsvorrichtung (100) gekennzeichnet ist, indem sie umfasst:
einen Übertragungsinformations-Steuerungsteil (110), der dafür eingerichtet ist, für die Mobilstationsvorrichtung (200) eine Information zu konfigurieren, die für die Mobilstationsvorrichtung (200) spezifisch ist und die der Mobilstationsvorrichtung (200) erlaubt, aus der Vielzahl von Frequenzbändern ein einzelnes Frequenzband zu bestimmen, für das eine Empfangsqualitätsinformation in einem Subframe übertragen werden soll, falls die Empfangsqualitätsinformation bezüglich jedes der Vielzahl von Frequenzbändern von der Mobilstationsvorrichtung (200) in dem Subframe erhalten wird; und
einen Empfangsteil (130), der dafür eingerichtet ist, in dem Subframe von der Mobilstationsvorrichtung (200) die Empfangsqualitätsinformation bezüglich des einzelnen Frequenzbandes zu empfangen, das von der Mobilstationsvorrichtung (200) bestimmt wurde, um in dem Subframe übertragen zu werden, gemäß der Information, die für die Mobilstationsvorrichtung (200) spezifisch ist.

2. Basisstationsvorrichtung (100) nach Anspruch 1, wobei
der Empfangsteil dafür eingerichtet ist, von der Mobilstationsvorrichtung (200) auf einem physikalischen Uplink-Steuerkanal die Empfangsqualitätsinformation bezüglich des einzelnen Frequenzbands zu empfangen.

3. Mobilstationsvorrichtung (200), welche zu einer Basisstationsvorrichtung (100) eine Empfangsqualitätsinformation bezüglich jedes einer Vielzahl von Frequenzbändern periodisch überträgt, die aggregiert sind, wobei die Mobilstationsvorrichtung (200) umfasst:
einen Empfangsqualitätsinformations-Steuerungsteil (210), der dafür eingerichtet ist, aus der Vielzahl von Frequenzbändern ein einzelnes Frequenzband zu bestimmen gemäß einer Information, die für die Mobilstationsvorrichtung (200) spezifisch ist und die durch die Basisstationsvorrichtung (100) konfiguriert wird, falls die Empfangsqualitätsinformation bezüglich jedes der Vielzahl von Frequenzbändern in einem Subframe erhalten wird; und
einen Übertragungsteil (220), der dafür eingerichtet ist, in dem Subframe zu der Basisstationsvorrichtung (100) die Empfangsqualitätsinformation bezüglich des einzelnen Frequenzbandes zu übertragen, das von dem Empfangsqualitätsinformations-Steuerungsteil (210) bestimmt wurde.

4. Mobilstationsvorrichtung (200) nach Anspruch 3, wobei
der Übertragungsteil (220) dafür eingerichtet ist, zu der Basisstationsvorrichtung (100) auf einem physikalischen Uplink-Steuerkanal die Empfangsqualitätsinformation bezüglich des einzelnen Frequenzbands zu übertragen.

5. Kommunikationsverfahren, das von einer Basisstationsvorrichtung (100) ausgeführt wird, welche von einer Mobilstationsvorrichtung (200) periodisch eine Empfangsqualitätsinformation bezüglich jedes einer Vielzahl von Frequenzbändern empfängt, die aggregiert sind, wobei das Kommunikationsverfahren umfasst:
Konfigurieren, für die Mobilstationsvorrichtung (200), einer Information, die für die Mobilstationsvorrichtung (200) spezifisch ist und die der Mobilstationsvorrichtung (200) erlaubt, aus der Vielzahl von Frequenzbändern ein einzelnes Frequenzband zu bestimmen, für das eine Empfangsqualitätsinformation in einem Subframe übertragen werden soll, falls die Empfangsqualitätsinformation bezüglich jedes der Vielzahl von Frequenzbändern von der Mobilstationsvorrichtung (200) in dem Subframe erhalten wird; und
Empfangen, in dem Subframe von der Mobilstationsvorrichtung (200), der Empfangsqualitätsinformation bezüglich des einzelnen Frequenzbandes, das von der Mobilstationsvorrichtung (200) bestimmt wurde, um in dem Subframe übertragen zu werden, gemäß der Information, die für die Mobilstationsvorrichtung (200) spezifisch ist.

6. Kommunikationsverfahren nach Anspruch 5, wobei
von der Mobilstationsvorrichtung (200) die Empfangsqualitätsinformation bezüglich des einzelnen Frequenzbands auf einem physikalischen Uplink-Steuerkanal empfangen wird.

7. Kommunikationsverfahren, das von einer Mobilstationsvorrichtung (200) ausgeführt wird, welche zu einer Basisstationsvorrichtung (100) eine Empfangsqualitätsinformation bezüglich jedes einer Vielzahl von Frequenzbändern periodisch überträgt, die aggregiert sind, wobei das Kommunikationsverfahren umfasst:
falls die Empfangsqualitätsinformation bezüglich jedes der Vielzahl von Frequenzbändern in einem Subframe erhalten wird,
Bestimmen eines einzelnen Frequenzbands aus der Vielzahl von Frequenzbändern gemäß einer Information, die für die Mobilstationsvorrichtung (200) spezifisch ist und die durch die Basisstationsvorrichtung (100) konfiguriert wird; und
Übertragen, in dem Subframe zu der Basisstationsvorrichtung (100), der Empfangsqualitätsinformation bezüglich des einzelnen Frequenzbandes, das von dem Empfangsqualitätsinformations-Steuerungsteil (210) bestimmt wurde.

8. Kommunikationsverfahren nach Anspruch 7, wobei
die Empfangsqualitätsinformation bezüglich des bestimmten einzelnen Frequenzbands auf einem physikalischen Uplink-Steuerkanal zu der Basisstationsvorrichtung (100) übertragen wird.

## Revendications

1. Appareil de station de base (100) qui reçoit périodiquement d'un appareil de station mobile (200) des informations de qualité de réception qui concernent chacune d'un ensemble de bandes de fréquence qui sont agrégées, ledit appareil de station de base (100) étant **caractérisé en ce qu'**il comprend :
une section de commande d'informations de transmission (110) conçue pour configurer pour l'appareil de station mobile (200) des informations qui sont propres à l'appareil de station mobile (200) et qui permettent à celui-ci de décider, à partir de l'ensemble de bandes de fréquence, une bande de fréquence unique pour laquelle les informations de qualité de réception doivent être transmises dans une sous-trame, dans un cas où les informations de qualité de réception concernant chacune de l'ensemble de bandes de fréquences sont obtenues par l'appareil de station mobile (200) dans la sous-trame ; et
une section de réception (130) conçue pour recevoir dans la sous-trame, à partir de l'appareil de station mobile (200), les informations de qualité de réception qui concernent la bande de fréquence unique décidée par l'appareil de station mobile (200) à transmettre dans la sous-trame, selon les informations qui sont propres à l'appareil de station mobile (200).

2. Appareil de station de base (100) selon la revendication 1, dans lequel la section de réception est conçue pour recevoir de l'appareil de station mobile (200), sur un canal physique de commande de liaison montante, les informations de qualité de réception qui concernent l'unique bande de fréquence.

3. Appareil de station mobile (200) qui transmet périodiquement à un appareil de station de base (100) des informations de qualité de réception qui concernent chacune d'un ensemble de bandes de fréquence qui sont agrégées, ledit appareil de station mobile (200) comprenant :
une section de commande d'informations de qualité de réception (210) conçue pour décider une bande de fréquence unique, à partir de l'ensemble de bandes de fréquence, selon des informations qui sont propres à l'appareil de station mobile (200) et qui sont configurées par l'appareil de station de base (100) dans un cas où les informations de qualité de réception concernant chacune de l'ensemble de bandes de fréquences sont obtenues dans la sous-trame ; et
une section de transmission (220) conçue pour transmettre à l'appareil de station de base (100), dans la sous-trame, les informations de qualité de réception qui concernent la bande de fréquence unique décidée par la section de commande d'informations de qualité de réception (210) .

4. Appareil de station mobile (200) selon la revendication 3, dans lequel la section de transmission (220) est conçue pour transmettre les informations de qualité de réception qui concernent la bande de fréquence unique à l'appareil de station de base (100) sur un canal physique de commande de liaison montante.

5. Procédé de communication exécuté par un appareil de station de base (100) qui reçoit périodiquement d'un appareil de station mobile (200) des informations de qualité de réception qui concernent chacune d'un ensemble de bandes de fréquence qui sont agrégées, ledit procédé de communication comprenant :
la configuration, pour l'appareil de station mobile (200), d'informations qui sont propres à l'appareil de station mobile (200) et qui permettent à celui-ci de décider, à partir de l'ensemble de bandes de fréquence, une bande de fréquence unique pour laquelle les informations de qualité de réception doivent être transmises dans une sous-trame, dans un cas où les informations de qualité de réception concernant chacune de l'ensemble de bandes de fréquences sont obtenues par l'appareil de station mobile (200) dans la sous-trame ; et
la réception dans la sous-trame, à partir de l'appareil de station mobile (200), des informations de qualité de réception qui concernent la bande de fréquence unique décidée par l'appareil de station mobile (200) à transmettre dans la sous-trame, selon les informations qui sont propres à l'appareil de station mobile (200).

6. Procédé de communication selon la revendication 5, selon lequel les informations de qualité de réception qui concernent la bande de fréquence unique sont reçues à partir de l'appareil de station mobile (200) sur un canal physique de commande de liaison montante.

7. Procédé de communication exécuté par un appareil de station mobile (200) qui transmet périodiquement à un appareil de station de base (100) des informations de qualité de réception qui concernent chacune d'un ensemble de bandes de fréquence qui sont agrégées, le procédé de communication comprenant :
dans un cas où les informations de qualité de réception concernant chacune de l'ensemble de bandes de fréquences sont obtenues dans la sous-trame,
la décision d'une bande de fréquence unique, à partir de l'ensemble de bandes de fréquence, selon les informations qui sont propres à l'appareil de station mobile (200) et qui sont configurées par l'appareil de station de base (100) ; et
la transmission à l'appareil de station de base (100), dans la sous-trame, des informations de qualité de réception qui concernent la bande de fréquence unique décidée par la section de commande d'informations de qualité de réception (210).

8. Procédé de communication selon la revendication 7, selon lequel les informations de qualité de réception qui concernent la bande de fréquence unique décidée sont transmises à l'appareil de station de base (100) sur un canal physique de commande de liaison montante.
